# EUROPÄISCHE PATENTSCHRIFT

(11) **EP 1 376 278 B1**
(45) Veröffentlichungstag und Bekanntmachung des Hinweises auf die Patenterteilung: **13.04.2016**
(21) Anmeldenummer: 03010784.1
(22) Anmeldetag: 14.05.2003
(51) Int. Cl.: G05B 19/042, G05B 19/414

(54) **Anlage**
System
Système

(30) Priorität: 27.06.2002 DE 10228863
(43) Veröffentlichungstag der Anmeldung: 02.01.2004
(73) Patentinhaber: SEW-EURODRIVE GmbH & Co. KG, 76646 Bruchsal (DE)
(72) Erfinder: Roth-Stielow, Jörg, Dr., 75015 Bretten (DE)

(56) Entgegenhaltungen:
- EP-A1- 1 139 559
- EP-A2- 0 811 451
- EP-A2- 1 011 035
- DE-A1- 19 605 037
- JP-A- 2001 268 990
- US-A- 5 877 959
- STERN M ET AL: "SERVOANTRIEBE IM UMBRUCH MODERNE SYSTEMKONZEPTE IN DER ELEKTRISCHEN ANTRIEBSTECHNIK. TEIL 2" ELEKTRONIK, WEKA FACHZEITSCHRIFTENVERLAG, POING, DE, Bd. 43, Nr. 22, 31. Oktober 1994 (1994-10-31), Seiten 96-98,100, XP000474164 ISSN: 0013-5658
- ANONYMOUS: "STEUERSCHRANK KR C1 SPEZIFIKATION, KUKA ROBOTER GMBH" [Online] 22. November 1999 (1999-11-22), , XP002252341 Gefunden im Internet: URL:212.202.249.180/web/k/www.kuka-roboter .de/doku/ spezifikationen/KUKA/Spez_Schrank_KUKA.htm > [gefunden am 2003-08-25] * Seite 3 - Seite 9 *
- EHRENBERG J ET AL: "CAN-BUS MIT OSI-SCHICHT 7 OEFFNET TOR ZUR FABRIK. ÖTEIL 2: VOLL DIGITALER MOTORREGLER FUER UNIVERSELLEN EINSATZ" ELEKTRONIK, WEKA FACHZEITSCHRIFTENVERLAG, POING, DE, Bd. 40, Nr. 23, 12. November 1991 (1991-11-12), Seiten 62-65,68, XP000267146 ISSN: 0013-5658

## Beschreibung

Die Erfindung betrifft eine Anlage.

Antriebe umfassen Umrichter und von diesen versorgte Elektromotoren oder Getriebemotoren. Umrichter für Elektromotoren umfassen Leistungselektronik und Signalelektronik. Dabei generiert die Signalelektronik pulsweitenmodulierte Steuersignale, die zum Ansteuern von von der Leistungselektronik umfassten, elektronischen Leistungsschaltern verwendet werden. Zur Stromversorgung ist der Umrichter mit seinem Leistungselektronikteil mit dem Elektromotor elektrisch verbunden.

Rechner, insbesondere Industrie-PC, mit Steckkarten sind bekannt.

**Aus der** JP 2001 268990 A **ist ein Rechner bekannt, der Steckkarten aufweist, die Signalelektronik von Umrichtern enthalten. Die Leistungselektronik und deren Leistungsversorgung ist jedoch außerhalb des Rechners angeordnet.**

**Aus der** DE 196 05 037 **ist ein Umrichtermotor mit integriertem Geber, also Winkellagesensor, bekannt.**

**Aus der** US 5 877 959 A **ist ein NC System bekannt.**

**Aus der** EP 0 811 451 A2 **ist ein integriertes Steuerungssystem für einen Arbeitsroboter bekannt.**

**Aus der Veröffentlichung** STERN M ET AL:"Servoantriebe im Umbruch Moderne Systemkonzepte in der elektrischen Antriebstechnik. Teil 2", ELEKTRONIK, Bd. 43, Nr. 22, 31. Oktober 1994, Seiten 96 - 98, 100**, XP 000474164 ist die moderne Zweigerätetechnik bekannt.**

**Aus der** EP 1 139 559 A1 **ist ein drehzahlsteuerbarer Drehstrommotor zum Betrieb an einem Frequenzumrichter bekannt.**

Der Erfindung liegt die Aufgabe zugrunde, Antriebe in kostengünstiger Weise derart weiterzubilden, dass Materialkosten verringerbar und somit der Umweltschutz verbesserbar ist.

Erfindungsgemäß wird die Aufgabe bei der Anlage nach den in Anspruch 1 angegebenen Merkmalen gelöst.

Wesentliche Merkmale der Erfindung sind, dass die Anlage mit mindestens einem Antrieb, wobei der Antrieb mindestens einen Elektromotor und einen Umrichter umfasst, wobei der Umrichter mindestens Leistungs- und Signalelektronik umfasst, und wobei zumindest die Signalelektronik des Umrichters auf eine Steckkarte für einen Steckkartenplätze umfassenden Rechner ausgeführt ist.

Von Vorteil ist dabei, dass die Erfindung insbesondere bei industriellen oder häuslichen Heizungsanlagen mit Pumpen, Mischern, Stellern oder anderen Aktoren, die Elektromotoren umfassen, anwendbar ist. Außerdem ist die Erfindung auch bei industriellen Anlagen anwendbar, insbesondere bei Anlagen oder Maschinen, die schon im Stand der Technik einen Rechner umfassen, da bei diesen Anlagen oder Maschinen nur ein äußerst geringer Aufwand für die zur Schaffung der Erfindung notwendigen Änderungen vorzusehen sind und die erfindungsgemäßen Vorteile erreicht werden.

Weiter ist von Vorteil, dass die Daten zwischen Signalelektronik und Rechner in kostengünstiger Weise sehr schnell übertragbar sind und somit neue Echtzeitanwendungen erschließbar sind. Des Weiteren hat ein Rechner einen viel größeren Speicherplatz, beispielsweise 1 Gbyte und mehr, und eine viel größere Rechenkapazität, beispielsweise Intelprozessor mit 1 GHz und mehr, als ein Umrichter nach Stand der Technik. Somit sind umfangreichere und komplexere Steuer- und Regelverfahren vorsehbar. Insbesondere ist ein umfangreicher, hoch komplexer Steuerungsablauf mit Positionierungssteuerungsabläufen programmierbar. Durch den in den Rechner integrierten Einbau der Steckkarte mit Signalelektronik ist ein extrem schneller Datenaustausch zwischen Signalelektronik und Rechner mit geringstem Aufwand realisierbar, insbesondere ist dieser Datenaustausch viel schneller als bei einer seriellen Schnittstelle des Rechners.

Viele Maschinen und Anlagen umfassen schon im Stand der Technik einen Rechner. Zur Realisierung der Erfindung muss also nur eine Steckkarte eingesteckt werden und der Elektromotor angeschlossen werden. Somit ist in einfachster und kostengünstiger Weise ein umrichtergespeister Antrieb herstellbar. Außerdem ist kein Gehäuse für die Signalelektronik oder den Umrichter notwendig, weil das Gehäuse des Rechners die Steckkarte schützt.

Bei einer vorteilhaften Ausgestaltung umfasst der Elektromotor mindestens einen Geber, Sensor und/oder ein elektronisches Typenschild und die zugehörigen Informationen, wie Winkellage, Nulllage, Typendaten oder dergleichen, sind mittels elektrischer Leitungen oder berührungslos mittels elektromagnetischer Wellen an die die Steuerelektronik umfassende Steckkarte übertragbar oder mit der Steckkarte austauschbar. Von Vorteil ist dabei, dass zwischen Steckkarte und Elektromotor eine Datenübertragung vorgesehen ist, die Informationen für das Steuer- und/oder Regelverfahren beinhaltet oder Informationen von einem im Bereich des Motors vorgesehenen Datenspeicher beinhalten. Insbesondere ist die Datenübertragung bei einer weiteren Ausgestaltung auch bidirektional ausgeführt.

Bei einer vorteilhaften Ausgestaltung umfasst der Rechner mindestens eine weitere Steckkarte, die Ein- und Ausgänge derart aufweist, dass der Rechner auch SPS-Funktionalität umfasst. Von Vorteil ist dabei, dass mit dem Rechner nicht nur die einem Umrichter entsprechende Versorgung des Antriebs vorsehbar ist sondern auch eine Steuerung durch den Rechner gebildet wird. Es können also Ablaufsteuerungsprogramme und/oder Positionierprogramme ausgeführt werden, wobei abhängig von den Signalen der Eingänge Ausgangssignale gebildet werden und/oder der Antrieb an-, abgeschaltet oder beschleunigt oder konstant betrieben wird. Insbesondere sind in den Rechner auch mehrere erfindungsgemäße Steckkarten mit Umrichterfunktionalität einsteckbar, wodurch dann auch elektronische Kurvenscheiben realisierbar sind, insbesondere bei Mehrachsantrieben zum Erzeugen von Kreisbahnen oder anderen gekrümmten Kurvenverläufen. Dabei werden mehrere Antriebe in gegenseitiger Abhängigkeit betrieben. Insbesondere durch den schnellen internen Datenaustausch vom Rechner zur Steckkarte lassen sich dabei sehr schnelle Echtzeitantriebe realisieren. Insbesondere sind die Bahnabweichungen bei den elektronischen Kurvenscheiben und Mehrachsbetrieben verringerbar.

Bei einer vorteilhaften Ausgestaltung umfasst der Rechner mindestens eine weitere Steckkarte, die eine Feldbusschnittstelle derart vorsieht, dass der Rechner als Feldbusteilnehmer zum Datenaustausch über Feldbus betreibbar ist. Von Vorteil ist dabei, dass am Rechner auch weitere Feldbusteilnehmer und auch zentrale Rechner zum Datenaustausch anschließbar sind. Der Rechner umfasst also alle Funktionalitäten eines Umrichters mit Feldbusschnittstelle und einer SPS zusammen unter Verwendung nur eines einzigen Gehäuses und nur einer einzigen Stromversorgung für die Signalelektronik und die sonstige Hardware, umfassend Mikroprozessor und Speicher, des Rechners.

Bei einer vorteilhaften Ausgestaltung hat der Rechner einen Anschluss an ein Rechnernetz, wie Internet. Von Vorteil ist dabei, dass auch Datenaustausch über große Entfernungen in kostengünstiger Weise ermöglicht sind. Außerdem ist somit der Umrichter direkt mit Internet verbunden und es kann beispielsweise eine Fernwartung, Parametrierung oder Datenanalyse per Internet vorgenommen werden.

Bei einer vorteilhaften Ausgestaltung ist der Rechner als Industrie-PC und/oder in hoher Schutzart ausgeführt und die aus dem Rechner austretenden Leitungen, insbesondere Leitungen von der Steckkarte mit Signalelektronik, sind in hoher Schutzart ausgeführt. Von Vorteil ist dabei, dass auch ein dezentraler Einsatz der Steckkarte mit Rechner innerhalb der Anlage, also im Feld, einsetzbar ist. Dabei ist sogar ein Schutz gegen Spritzwasser, chemische Flüssigkeiten, Rüttelschwingungen und/oder Vibrationen vorhanden.

Bei einer vorteilhaften Ausgestaltung ist der Elektromotor mit der Steckkarte zur elektrischen Versorgung verbunden. Von Vorteil ist dabei, dass für den Rechner und den Elektromotor nur eine Netzversorgung notwendig ist. Insbesondere ist die vom Netzteil des Rechners erzeugte Kleinspannung auch zum Versorgen der Steckkarte und somit auch des Elektromotors verwendbar.

Bei einer vorteilhaften Ausgestaltung ist der Elektromotor von einer außerhalb des Gehäuses des Rechners befindlichen Leistungselektronik elektrisch versorgt, wobei die Leistungselektronik mit der die Signalelektronik umfassenden Steckkarte elektrisch verbunden ist oder mittels elektromagnetischer Wellen zur Übertragung von Signalen zwischen Signalelektronik und Leistungselektronik ausgebildet ist. Von Vorteil ist dabei, dass einerseits die Netzversorgung des Rechners auch für die Signalelektronik verwendbar ist und andererseits als Elektromotor ein leistungsstarker, insbesondere mehrere Kilowatt oder Hundertkilowatt verbrauchender Elektromotor verwendbar ist. Es ist also ein Industriemotor verwendbar, der von einem Rechner mit Steckkarte gesteuert und geregelt wird.

Bei einer vorteilhaften Ausgestaltung ist die Leistungselektronik von einem Gehäuse umgeben. Von Vorteil ist dabei, dass die Steckkarte mit Signalelektronik nur Steuersignale und ähnliche Signale an die Leistungselektronik liefern muss oder mit dieser austauschen muss. Die Leistungsversorgung des Elektromotors hingegen erfolgt unabhängig vom Rechner. Somit entstehen auch keine Kühlleistungsprobleme innerhalb des Rechners. Das Gehäuse für die Leistungselektronik ist für die entsprechende Wärmeabfuhr und Schutzart dimensionierbar und auslegbar. Insbesondere ist dieses Gehäuse auch dezentral in der Anlage, also im Feld, einsetzbar.

Bei einer vorteilhaften Ausgestaltung ist das Gehäuse Gehäuseteil des Elektromotor-Gehäuses. Von Vorteil ist dabei, dass kein zusätzliches Gehäuse notwendig ist sondern das sowieso notwendige Gehäuse des Elektromotors verwendbar ist.

Bei einer vorteilhaften Ausgestaltung ist das Gehäuse Teil, insbesondere Deckel, des Anschlusskastens des Elektromotors. Insbesondere ist dabei der Wärmeübergangswiderstand von der Leistungselektronik zum Elektromotor hin größer als zur Umgebung. Beispielsweise ist also zwischen der Leistungselektronik und dem Elektromotor eine Wärmesperre eingebracht. Von Vorteil ist dabei, dass die Wärme der Leistungselektronik über die Klemmenkasten-Gehäuseteile an die Umgebung abgebbar ist. Insbesondere ist der Deckel des Anschlusskastens vom Elektromotor mit einer Wärmesperre abgetrennt und somit die Wärme über den Deckel abgebbar.

Bei einer vorteilhaften Ausgestaltung weist das Gehäuse quasizweidimensionale Kühlrippen und/oder quasieindimensionale Kühlfinger auf. Von Vorteil ist dabei, dass mit den Kühlfingern montagerichtungsunabhängig Wärme konvektiv abgebbar ist und mit den Kühlrippen kostengünstige Mittel zur Wärmeabgabe verwendbar sind.

Bei einer vorteilhaften Ausgestaltung ist die Leistungselektronik aus dem Netz mit Starkstrom, insbesondere Drehstrom, versorgbar. Von Vorteil ist dabei, dass der Rechner nicht überbeansprucht wird sondern eine separate Versorgung des Elektromotors vorsehbar ist, aber die Steuerelektronik von der gefilterten Versorgungsspannung des Netzteiles des Rechners versorgbar ist.

Bei einer anderen vorteilhaften Ausgestaltung ist die Leistungselektronik mittels eines Systems zur berührungslosen Energieübertragung versorgbar. Von Vorteil ist dabei, dass der Elektromotor auch auf einem beweglichen System betreibbar und versorgbar ist und keine verschleißbehaftete Versorgung, wie Schleifleitung oder dergleichen, vorgesehen ist. Dabei ist insbesondere vorteilhaft die berührungslose Informationsübertragung zum Rechner anzuwenden, beispielsweise mittels Infrarot- oder Bluetooth- oder anderen Übertragungen unter Verwendung von elektromagnetischen Wellen.

Weitere Vorteile ergeben sich aus den Unteransprüchen.

Die Erfindung wird nun anhand von Abbildungen näher erläutert:

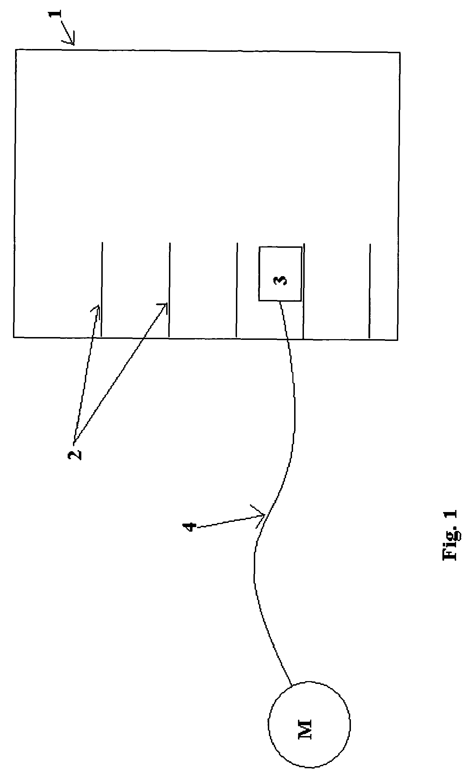

In der Figur 1 ist eine erfindungsgemäße Anlage skizziert. Der Rechner umfasst ein nichteingezeichnetes Netzteil, das Kleinspannung zur Versorgung der Mikroprozessoren, Speicher und weiteren Peripherien erzeugt. Insbesondere werden die Steckkartenplätze 2 elektrisch verbunden mit der Hardware des Rechners 1. Somit ist die eingesteckte Steckkarte 3 mit Signal- und Leistungselektronik ebenfalls mit Kleinspannung versorgbar. Das Netzteil des Rechners muss die dafür erforderliche Leistung aufweisen und, falls die erforderliche Leistung die verfügbare Leistung des Netzteils des Rechners übersteigt, entsprechend dimensioniert werden, wobei auch die Wärmeabfuhr entsprechend konstruiert und dimensioniert werden muss. Mit der Leitung zur Energie- und Informationsübertragungsleitung 4 ist ein Elektromotor M angeschlossen, der über diese Leitung mit Energie versorgt wird. Der Elektromotor M ist auch mit einem Winkellagegeber, anderen Sensoren oder einem elektronischen Typenschild ausstattbar. Die zugehörigen Informationen sind dann ebenfalls über die genannte Leitung übertragbar. Dabei ist entweder ein mehradriges Kabel verwendbar oder die Daten werden aufmoduliert auf den erstgenannten Leitungen.

In einem anderen erfindungsgemäßen Ausführungsbeispiel werden die Informationen berührungslos übertragen, beispielsweise mittels Infrarot- oder Bluetooth- oder anderen Übertragungsarten unter Verwendung von elektromagnetischen Wellen.

Der Rechner ist als Industrie-PC, also in hoher Schutzart und mechanisch stabiler Ausführung vorgesehen.

In anderen erfindungsgemäßen Ausführungsbeispielen weist der Rechner Internetverbindungen, weitere Steckkarten mit Feldbusschnittstelle und/oder Ein- und Ausgängen auf. Somit ist der Rechner auch derart ausführbar, dass eine SPS ausführbar ist. Also können auch Positioniersteuerungsabläufe programmiert und ausgeführt werden, die abhängig von den Eingängen und/oder über Feldbus oder Internet übermittelten Daten betreibbar sind.

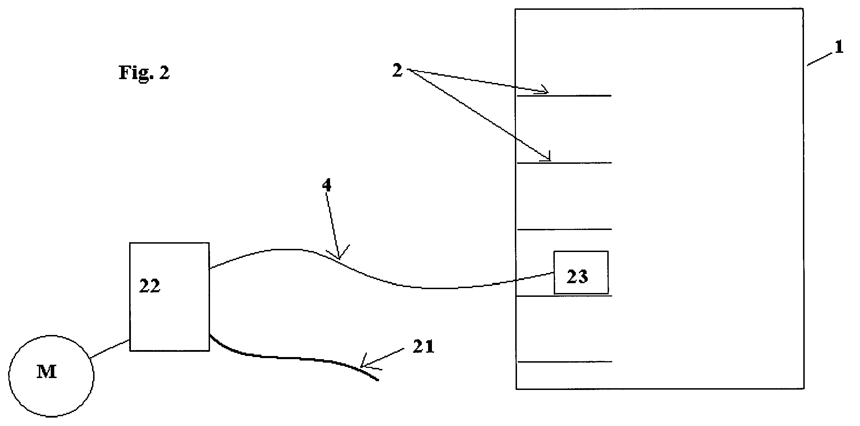

In Figur 2 ist ein anderes erfindungsgemäßes Ausführungsbeispiel skizziert. Dabei ist nur die Steckkarte 23 mit Signalelektronik innerhalb des Rechners vorgesehen und von diesem mit Energie versorgbar. Die Übertragung der Signale zur Ansteuerung der Leistungselektronik, insbesondere der elektronischen Leistungsschalter, ist wiederum berührungslos oder mittels elektrischer Leitungen ausführbar. Die Leistungselektronik 22 ist außerhalb des Gehäuses des Rechners 1 vorgesehen und weist ein eigenes Gehäuse auf.

In einem anderen erfindungsgemäßen Ausführungsbeispiel ist das Gehäuse des Motors M und das Gehäuse der Leistungselektronik 22 integriert. Somit ist kein spezielles Gehäuse für die Leistungselektronik 22 notwendig, sondern sie ist im Bereich des Motors, insbesondere im Bereich des Deckels des Anschlusskastens vorsehbar. Dabei ist in anderen erfindungsgemäßen Ausführungsbeispielen eine Wärmesperre zum Motor hin vorsehbar. Darüber hinaus ist der Deckel mit Kühlrippen und/oder Kühlfingern ausgestaltbar. Je nach Anforderung ist ein Deckel mit Kühlrippen vorteilhaft wegen der richtungsunabhängigen konvektiven Wärmeabfuhr oder ein Deckel mit kostengünstig herstellbaren Kühlrippen.

In einem erfindungsgemäßen Ausführungsbeispiel ist die Leistungselektronik 22 mit Drehstrom versorgbar. Sie umfasst einen Gleichrichter und Mittel zur Glättung der Gleichspannung, insbesondere einen Kondensator. Mit dieser Gleichspannung sind elektronische Leistungsschalter verbunden, deren Steuerspannungen entsprechend den von der Signalelektronik 23 gelieferten Signalen gestaltet sind. Auf diese Weise, insbesondere mittels Pulsweitenmodulation, ist der Elektromotor mit einer ein- oder mehrphasigen Wechselspannung versorgbar.

### Bezugszeichenliste

- 1: Rechner
- 2: Steckplatz
- 3: Steckkarte mit Signal- und Leistungselektronik
- 4: Energie- und Informationsübertragungsleitung

- 21: Versorgungsleitungen
- 22: Leistungselektronik
- 23: Steckkarte mit Signalelektronik
- M: Elektromotor

## Patentansprüche

1. Anlage mit mindestens einem Antrieb,
wobei der Antrieb mindestens einen Elektromotor (M) und einen Umrichter umfasst,
wobei der Umrichter mindestens Leistungs- und Signalelektronik umfasst,
**wobei** zumindest die Signalelektronik des Umrichters auf einer Steckkarte (23) für einen Steckkartenplätze umfassenden Rechner (1) aufgebracht ist und/oder von dieser Steckkarte (23) umfasst ist,
**wobei der Rechner (1) mindestens eine weitere Steckkarte umfasst, welche Ein- und Ausgänge derart aufweist, dass der Rechner (1) auch SPS-Funktionalität umfasst,**
**wobei der Elektromotor (M) mindestens einen Geber, einen Sensor und ein elektronisches Typenschild umfasst und die zugehörigen Informationen, wie Winkellage, Nulllage, Typendaten, berührungslos mittels elektromagnetischer Wellen an die die Steuerelektronik umfassende Steckkarte (23) übertragbar sind,**
**wobei der Elektromotor (M) von einer außerhalb des Gehäuses des Rechners (1) befindlichen Leistungselektronik (22) elektrisch versorgt ist, wobei die Leistungselektronik (22) mit der die Signalelektronik umfassenden Steckkarte (23) mittels elektromagnetischer Wellen zur Übertragung von Informationen zwischen Signalelektronik und Leistungselektronik (22) ausgebildet ist,**
**wobei die Leistungselektronik (22) von einem Gehäuse umgeben ist,**
**wobei die Leistungselektronik (22) mittels eines Systems zur berührungslosen Energieübertragung versorgbar ist,**
**wobei das Gehäuse Gehäuseteil des Elektromotor-Gehäuses ist,**
**wobei das Gehäuse Teil, insbesondere Deckel, des Anschlusskastens des Elektromotors (M) ist,**
**wobei der Wärmeübergangswiderstand von der Leistungselektronik (22) zum Elektromotor (M) hin größer ist als zur Umgebung**
**wobei zwischen der Leistungselektronik (22) und dem Elektromotor (M) eine Wärmesperre eingebracht ist.**

2. Anlage nach Anspruch 1,
**dadurch gekennzeichnet, dass**
der Rechner (1) mindestens eine weitere Steckkarte umfasst, die eine Feldbusschnittstelle derart darstellt, dass der Rechner (1) als Feldbusteilnehmer zum Datenaustausch über Feldbus betreibbar ist.

3. Anlage nach mindestens einem der vorangegangenen Ansprüche,
**dadurch gekennzeichnet, dass**
der Rechner (1) einen Anschluss an ein Rechnernetz, wie Internet, hat.

4. Anlage nach mindestens einem der vorangegangenen Ansprüche,
**dadurch gekennzeichnet, dass**
der Rechner (1) als Industrie-PC und/oder in hoher Schutzart ausgeführt ist und die aus dem Rechner (1) austretenden Leitungen, insbesondere Leitungen von der Steckkarte (23) mit Signalelektronik, in hoher Schutzart ausgeführt sind
und/oder dass die zugehörigen Öffnungen für die austretenden Leitungen dicht und in entsprechender Schutzart ausgeführt sind.

5. Anlage nach mindestens einem der vorangegangenen Ansprüche,
**dadurch gekennzeichnet, dass**
das Gehäuse quasizweidimensionale Kühlrippen und/oder quasieindimensionale Kühlfinger aufweist.

## Claims

1. System having at least one drive,
wherein the drive comprises at least one electric motor (M) and a converter,
wherein the converter comprises at least power and signal electronics,
wherein at least the signal electronics of the converter are mounted on a plug-in card (23) for a computer (1) comprising plug-in card slots and/or are comprised by this plug-in card (23),
wherein the computer (1) comprises at least one further plug-in card which has inputs and outputs such that the computer (1) also comprises PLC functionality,
wherein the electric motor (M) comprises at least one transmitter, sensor and electronic type plate and the associated information, such as angular position, zero position, type data, is transmittable contactlessly by means of electromagnetic waves to the plug-in card (23) comprising the control electronics,
wherein the electric motor (M) is electrically supplied by power electronics (22) located outside the housing of the computer (1), wherein the power electronics (22) with the plug-in card (23) comprising the signal electronics are configured to transmit information between signal electronics and power electronics (22) by means of electromagnetic waves, wherein the power electronics (22) are surrounded by a housing,
wherein the power electronics (22) are suppliable by means of a system for contactless energy transmission,
wherein the housing is a housing part of the electric motor housing (M),
wherein the housing is part, in particular a cover, of the connection box of the electric motor (M),
wherein the heat transmission resistance is greater from the power electronics (22) towards the electric motor (M) than to the environment,
wherein a thermal barrier is placed between the power electronics (22) and the electric motor (M).

2. System according to Claim 1,
**characterised in that**
the computer (1) comprises at least one further plug-in card, which provides a fieldbus interface such that the computer (1) is operable as a fieldbus station for data exchange via fieldbus.

3. System according to at least one of the preceding claims,
**characterised in that**
the computer (1) has a connection to a computer network, such as the Internet.

4. System according to at least one of the preceding claims,
**characterised in that**
the computer (1) is designed as an industrial PC and/or with a high degree of protection and the lines exiting the computer (1), in particular lines from the plug-in card (23) with signal electronics, are designed with a high degree of protection
and/or **in that** the associated openings for the exiting lines are sealed and designed with a corresponding degree of protection.

5. System according to at least one of the preceding claims,
**characterised in that**
the housing has quasi-two-dimensional cooling ribs and/or quasi-one-dimensional cooling fingers.

## Revendications

1. Installation comprenant au moins un entraînement,
l'entraînement comprenant au moins un moteur électrique (M) et un variateur de vitesse,
le variateur de vitesse comprenant au moins une électronique de puissance et de signalisation,
au moins l'électronique de signalisation du variateur de vitesse étant placée sur une carte enfichable (23) pour un ordinateur (1) comprenant des emplacements pour cartes enfichables et/ou étant comprise par cette carte enfichable,
l'ordinateur (1) comprenant au moins une autre carte enfichable qui présente des entrées et sorties de sorte que l'ordinateur (1) comprend aussi une fonctionnalité d'API,
le moteur électrique (M) comprenant au moins un transmetteur, un capteur et une plaque signalétique électronique et les informations associées, telles que position angulaire, position zéro, données de type, pouvant être transmises sans contact au moyen d'ondes électromagnétiques à la carte enfichable (23) comprenant l'électronique de commande,
le moteur électrique (M) étant alimenté électriquement par une électronique de puissance (22) se trouvant à l'extérieur du boîtier de l'ordinateur (1), l'électronique de puissance (22) avec la carte enfichable (23) comprenant l'électronique de signalisation étant conçue pour transmettre des informations entre l'électronique de signalisation et l'électronique de puissance (22) au moyen d'ondes électromagnétiques,
l'électronique de puissance (22) étant entourée par un boîtier,
l'électronique de puissance (22) pouvant être alimentée au moyen d'un système de transmission d'énergie sans contact,
le boîtier étant une partie de boîtier du boîtier du moteur électrique,
le boîtier étant une partie, en particulier le couvercle, de la boîte de raccordement du moteur électrique (M),
la résistance au transfert de chaleur de l'électronique de puissance (22) vers le moteur électrique (M) étant plus grande que vers l'environnement.
une barrière thermique étant placée entre l'électronique de puissance (22) et le moteur électrique (M).

2. Installation selon la revendication 1,
**caractérisée en ce que**
l'ordinateur (1) comprend au moins une autre carte enfichable qui constitue une interface de bus de terrain, de sorte que l'ordinateur (1) peut être utilisé comme abonné de bus de terrain pour l'échange de données par bus de terrain.

3. Installation selon au moins l'une des revendications précédentes,
**caractérisée en ce que**
l'ordinateur (1) possède une connexion à un réseau d'ordinateurs, tel qu'Internet.

4. Installation selon au moins l'une des revendications précédentes,
**caractérisée en ce que**
l'ordinateur (1) est réalisé sous la forme d'un PC industriel et/ou avec un haut degré de protection et les câbles sortant de l'ordinateur (1), en particulier les câbles de la carte enfichable (23) avec l'électronique de signalisation, sont réalisés avec un haut degré de protection
et/ou que les ouvertures associées pour les câbles sortants sont réalisées de manière étanches et avec un degré de protection correspondant.

5. Installation selon au moins l'une des revendications précédentes,
**caractérisée en ce que**
le boîtier présente des ailettes de refroidissement quasi bidimensionnelles et/ou des doigts de refroidissement quasi unidimensionnels.
